Europäisches Patentamt

European Patent Office

Office européen des brevets

(11) Publication number: **0 272 677 B1**

## EUROPEAN PATENT SPECIFICATION

(45) Date of publication of patent specification: **29.01.92**

(51) Int. Cl.⁵: **F01M 1/02**, F02F 7/00, F16N 13/20, F16H 57/02

(21) Application number: **87118973.4**

(22) Date of filing: **21.12.87**

(54) **Internal combustion engine.**

(30) Priority: **23.12.86 IT 5423886 U**

(43) Date of publication of application:
**29.06.88 Bulletin 88/26**

(45) Publication of the grant of the patent:
**29.01.92 Bulletin 92/05**

(84) Designated Contracting States:
**DE ES FR GB SE**

(56) References cited:
**EP-A- 0 161 421**    **DE-A- 2 256 753**
**DE-C- 313 021**    **FR-A- 1 081 478**
**FR-A- 1 396 355**    **US-A- 3 752 014**
**US-A- 4 594 911**

(73) Proprietor: **FIAT AUTO S.p.A.**
**Corso Giovanni Agnelli 200**
**I-10135 Torino(IT)**

(72) Inventor: **Bertero, Giorgio**
**Via Giovanni XXIII, 37**
**I-10024 Moncalieri(IT)**

(74) Representative: **Prato, Roberto et al**
**STUDIO TORTA Società Semplice Via Viotti 9**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 272 677 B1

## Description

This invention relates to a drive device for an oil pump in an internal combustion engine.

The oil pump in an internal combustion engine is driven directly from the crankshaft by means of a transmission linkage device consisting of a chain which transmits motion between two gears of which one is keyed onto the crankshaft and the other is angularly rigid with the pump rotor. According to the type of pump used, this rotor can be one of the two gears or rotary units (in the case of positive displacement gear pumps) or the pump impeller (in the case of centrifugal pumps). The assembly of the pump and of its said drive device currently involves firstly fixing the pump with its accessories to the engine crankcase, and then keying the drive gear onto the crankshaft and connecting it to the pump drive gear by a chain. However, because of the inevitable working tolerances, the distance between the two gears at the chain ends is never such as to ensure correct chain tension. Consequently, tightening pulleys or other devices (such as cams and the like) have to be used for adjusting the chain tension, or alternatively spacers are interposed between the pump casing and crankcase to set the distance between the chain-carrying gears to within the required tolerance, which is normally ± 0.02 mm.

It is apparent that the need to make these adjustments during assembly not only makes assembly complicated and costly, but results in lengthy assembly times which make this assembly practically impossible to automate. In fact, with current technology, this adjustment can only be made manually by a specialised operator. It is also known from EP-A-0 161 421 a device as defined in the preamble of Claim 1. In this construction the pump rotor is as axial with the axis of the crankshaft, so that no offset problems even arise.

The object of the present invention is to provide a drive device for an oil pump in an internal combustion engine which is free of the aforesaid drawbacks, and in particular which enables most of its components to be preassembled on the bench, and the resultant sub-unit to be then mounted on the engine automatically without the need for any adjustment.

Said object is attained according to the invention by a drive device for an oil pump in an internal combustion engine, having the features recited in Claim 1.

The invention will be more apparent from the description of two embodiments thereof given hereinafter by way of non-limiting example with reference to the accompanying drawings, in which;

Figure 1 is a partial section through an internal combustion engine provided with a first embodiment of the oil pump drive device constructed in accordance with the invention;

Figure 2 is a section through a detail of Figure 1 on the line II-II to an enlarged scale; and

Figure 3 shows a possible modification of the device according to the invention.

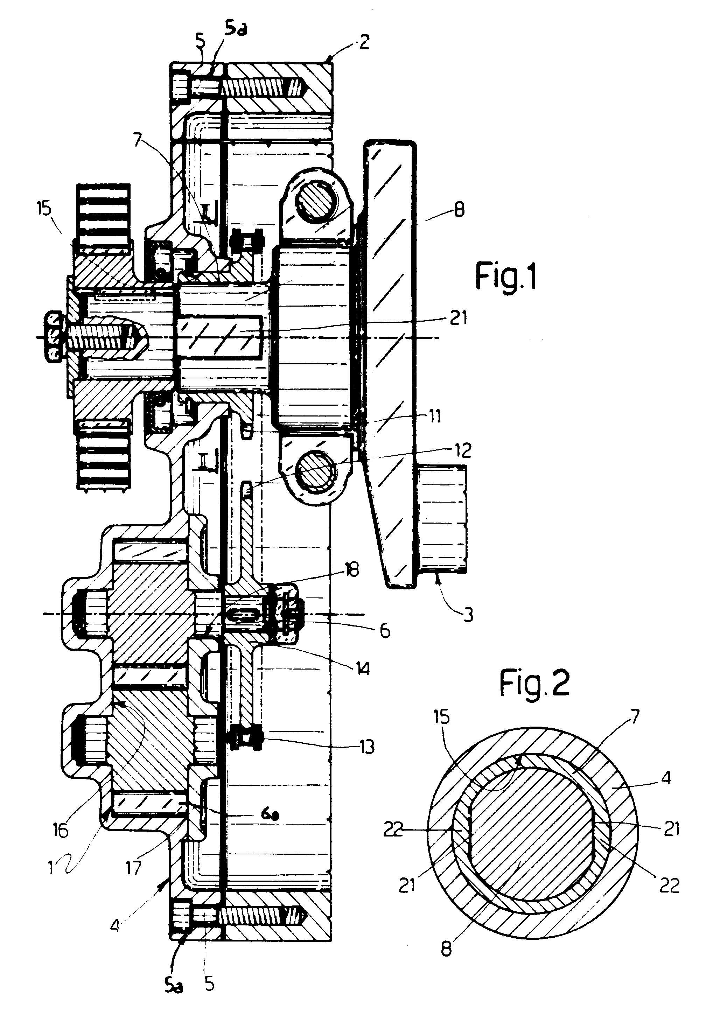

Figure 1 shows a drive device for an oil pump indicated by 1 and installed in an internal combustion engine, of known type, of which only part of the crankcase 2 and crankshaft 3 are shown for simplicity. The device of the invention comprises a baseplate 4 to be fixed by screws 5, housed slackly in respective seats 5a of the plate 4, to the crankcase 2 and shaped in such a manner as to house the pump 1 and support a linkage device for transmitting motion from the crankshaft 3 to the rotor 6 of the pump 1 having its axis parallel to the axis of the crankshaft 3. In the illustrated example, the pump 1 is of the positive displacement gear type, so that the rotor 6 consists of a toothed pinion engaging with a similar pinion 6a. The transmission device comprises a bush 7 keyed in an angularly rigid manner on the portion 8 of the crankshaft 3, and on which there is provided a toothed wheel 11 which by means of a chain 13 with a toothed wheel 12 provided on a bush 14 keyed in an angularly rigid manner to the rotor 6 of the pump 1.

The plate 4 comprises a through seat 15 in which the bush 7 is idly housed substantially without radial slack, and through which the crankshaft 3 emerges from the crankcase 2. In addition, the plate 4 comprises a projecting seat 16 forming the casing of the pump 1 together with a cover 17 which closes the seat 16 from the side facing the crankshaft 3. The pinions 6 and 6a are housed idly in the seat 16, and the cover 17 comprises a through hole 18 through which the hub of the rotor or pinion 6 extends into the crankcase 2 to receive the keyed bush 14. In the illustrated embodiment, the bush 7 with its relative toothed wheel 11 defines a gear mounted on the portion 8 of the crankshaft 3 with a predetermined radial gap, as can be seen in Figure 2, and motion transmission between the crankshaft 3 and said gear is obtained by two diametrically opposing flattened portions 21 formed on the portion 8, and by a further two flattened portions 22 corresponding to and conjugate with the portions 21, these also being diametrically opposing and provided on the inner wall of the bush 7. According to the invention, the seat 15 is provided at a predetermined distance from the axis of the rotor 6. Thus as this and the seat 15 are carried by a single common element (plate 4), the distance between their axes can be easily defined by normal known mechanical machining operations to within a very small predetermined tolerance, and in any event less than ± 0.02 mm.

In use, the bush 7, the pump 1 with the bush 14 keyed onto its rotor 6, and the chain 13 are preassembled on the plate 4 on the bench, and all necessary testing is carried out. The plate 4 is then centered on the crankshaft 3 by engaging the bush 7 with the portion 8, and is then fixed to the crankcase 2 by the screws 5. In this manner, it is apparent that the distance between the axes of the rotor 6 and shaft 3 is substantially equal to that between the rotor 6 and seat 15, and is therefore certainly within the necessary tolerance limits (approximately ± 0.02 mm) to obtain correct tension of the chain 13 without any need for adjustments or for the use of tightening pulleys. Any constructional inaccuracies are absorbed by the slack between the screws 5 and seats 5a and between the bush 7 and portion 8 of the crankshaft 3.

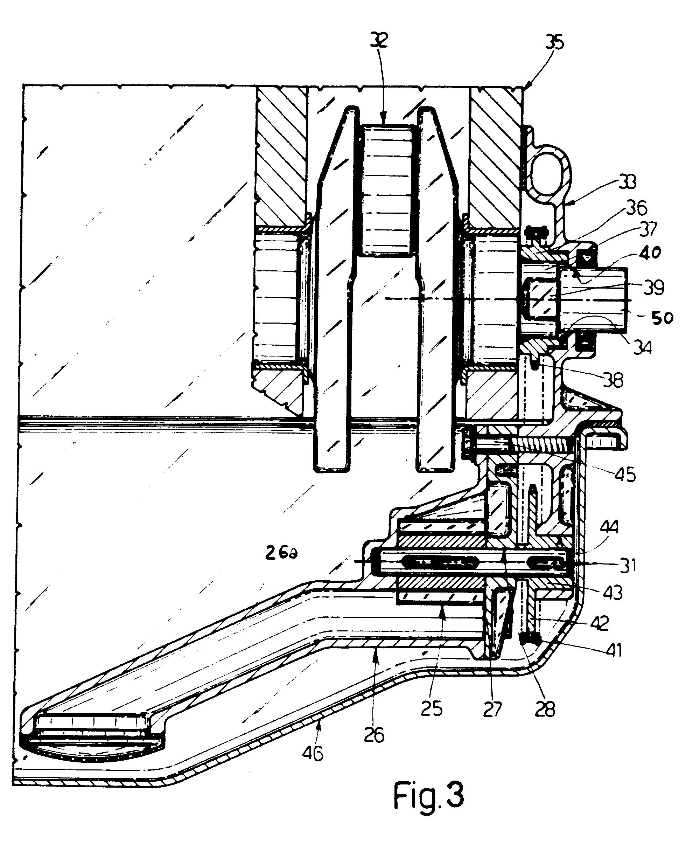

Figure 3 shows an embodiment of the device according to the invention which differs from that shown in Figure 1. In this case, the device is arranged to drive a pump 25 of different type from the previously described pump 1, and is housed in a pump casing 26 provided integrally with an oil intake pipe 26a and with a closure cover 27 having a through hole 28 through which the hub of the rotor 31 of the pump 25 emerges. The device also comprises means for transmitting motion between the crankshaft 32 of an internal combustion engine of known type, not shown for simplicity, of which the drive device forms part, and the rotor 31 which has its axis parallel to the axis of the crankshaft 32. These transmission means are supported by a plate 33 having a through seat 34 traversed by the end portion of the crankshaft 32 which extends beyond the internal combustion engine crankcase 35. The motion transmission means comprises a bush 36 keyed, in an angularly rigid manner substantially without any radial slack onto the portion 37 of the crankshaft 32 and on which a toothed wheel 38 is provided, a drive chain 41, and a toothed wheel 42 provided on a bush 43 keyed in an angularly rigid manner to the rotor 31 and preferably housed idly in a hole 44 formed in the plate 33, and engaging by means of the chain 41 the gear formed from the toothed wheel 38 and the relative bush 36.

Flattened portions 39 similar to those shown in Figure 2 are also provided on the portion 37 and in the bush 36, but in this case their purpose is merely to form a fit with the facility for axial sliding, but this can be also formed differently, for example by splines. According to the invention, the bush 36 is housed with a predetermined radial gap in the seat 34, and on the baseplate 33 there is provided a further through seat 40 formed substantially coaxial to the seat 34 and at a predetermined distance from the axis of the rotor 31. Again in this case, it is apparent that as the seat 40 and rotor 31 are carried by the same member (plate 33), the distance between their axes remains within a very narrow tolerance, and in any event less than ± 0.02 mm.

In use, the casing 26 and cover 27 are fitted together and preassembled on the plate 33, and a sump 46 is also preferably preassembled on the plate 33 to house the casing 26. The bush 36, housed slackly in the seat 34, and the chain 41 are finally preassembled on the plate 33. After testing this sub-unit on the bench, it is mounted on the crankshaft 35 by fixing the plate 33 to this latter in exactly the same manner as used for the plate 4, for example with screws 5 housed slackly in seats 5a, not shown for simplicity. During this mounting operation, the plate 33 is automatically centered on the axis of the crankshaft 32 as soon as this, and in particular its end portion 50, is inserted through the seat 40. Simultaneously, because of the clearance between the seat 34 and the bush 36, this latter is also free to centre itself perfectly coaxial with the crankshaft 32, even if any constructional inaccuracies are present. Thus, a predetermined distance between the axes of the crankshaft 32 and rotor 31 is obtained, as this is already present between the seat 40 and rotor 31, and the seat 40 is disposed coaxial to the crankshaft 32 as described. Thus again in this case, correct tension is obtained in the chain 41 without the need for any adjustment.

The advantages of the present invention are apparent from the aforegoing description. In particular, in both the described embodiments, all component parts of the drive device are preassembled on a plate, which is then centered on the crankshaft such that the tolerance in the distance between the gear axes lies within predetermined limits. It should be noted that as the components are preassembled on the plate, the mounting of the plate on the engine can be automated with all advantages deriving therefrom, both in terms of assembly times and production costs.

## Claims

1. An internal combustion engine comprising an oil pump (1), a crankshaft (3) rotating a pump rotor (6,31) of said oil pump (1) via a transmission linkage device and a crankcase (2) carrying said crankshaft (3) and a drive device for said oil pump (1) comprising: said transmission linkage device; a baseplate (4) rigidly supporting said pump (1) and the transmission linkage device, this latter comprising a gear (7-11,36-38) keyed to said crankshaft (3) in a manner angularly rigid therewith and idly carried by said plate (4); and coupling means (5,5a,21,39) for fixing said plate, together with said gear (7,11,36,38), pump (1) and transmission device already pre-assembled thereon, against said crankcase (2); **characterized** in that said plate (4) is provided with a centering seat (15,40) obtained at a pre-determined distance from the axis of the pump rotor (6,31), a radial gap being provided between said gear (7,11) and said crankshaft (3), or between said gear (36,38) and a mounting seat (34) for housing said gear (36,38) provided through said plate (4) coaxial with said centering seat (40).

2. An internal combustion engine as claimed in Claim 1, wherein said centering seat (15) idly houses said gear (7-11) substantially without slack and in a manner perfectly coaxial with the seat (15) itself, and wherein said gear (7-11) is connected to said crankshaft with radial slack; a pair of flattened portions (22) being provided internally on said gear (7-11) and cooperating with corresponding flattened portions (21) provided on said crankshaft (3) in correspondence with the keying region of said gear (7-11).

3. An internal combustion engine as claimed in Claim 1, wherein said centering seat (40) engages said crankshaft (3) substantially without slack and in a manner perfectly coaxial thereto in order to center the entire plate (4) with respect to the crankshaft, and wherein said gear (36-38) is idly housed inside said mounting seat (34) with radial slack and keyed substantially without slack on said crankshaft (3) in a manner perfectly coaxial thereto.

4. An internal combustion engine as claimed in Claim 3, wherein a pair of flattened portions (39) are provided internally on said gear (36-38) and cooperates with corresponding flattened portions (39) provided on said crankshaft (3) in correspondence with the keying region of said gear (36-38).

5. An internal combustion engine as claimed in one of the preceding Claims, wherein said coupling means comprise fixing screws (5) housed slackly in respective seats (5a) of said plate (4).

6. An internal combustion engine as claimed in one of the preceding Claims, wherein said transmission linkage device comprises said gear (7-11,36-38), a corresponding toothed wheel (12,42) keyed to said rotor (6,31) in an angularly rigid manner, and a drive chain (13,41) arranged to transmit motion between the gear (7-11,36-38) and said toothed wheel (12, 42).

7. An internal combustion engine as claimed in one of the preceding Claims, wherein a sump (46) is fixed to said plate (4) and within which said pump (1) is disposed.

**Revendications**

1. Moteur à combustion interne comprenant une pompe à huile (1), un vilebrequin (3) tournant un rotor de pompe (6, 31) de ladite pompe à huile (1) par l'intermédiaire d'un dispositif de train d'engrenages de transmission et un carter (2) supportant ledit vilebrequin (3) et un dispositif de commande pour ladite pompe à huile (1) comprenant : ledit dispositif de train d'engrenages de transmission ; une plaque d'appui (4) supportant rigidement ladite pompe (1) et le dispositif de train d'engrenages de transmission, ce dernier comprenant un engrenage (7-11, 36-38) calé sur ledit vilebrequin (3) d'une manière rigide en travers de celui-ci et porté librement par ladite plaque (4) et un moyen de couplage (5, 5a, 21, 39) pour fixer ladite plaque, de même que ledit engrenage (7, 11, 36, 38), la pompe (1) et le dispositif de transmission déjà préassemblé sur celle-ci, contre ledit carter (2) ; caractérisé en ce que ladite plaque (4) est prévue avec un siège de centrage (15, 40) obtenu à une distance prédéterminée de l'axe du rotor de pompe (6, 31), un écart radial étant prévu entre ledit engrenage (7, 11) et ledit vilebrequin (3), ou entre ledit engrenage (36, 38) et un siège de montage (34) pour loger ledit engrenage (36, 38) placé à travers ladite plaque (4) coaxiale audit siège de centrage (40).

2. Moteur à combustion interne selon la revendication 1, dans lequel ledit siège de centrage (15) reçoit librement ledit engrenage (7 à 11) sensiblement sans jeu d'une manière parfaitement coaxiale avec le siège (15) luimême et dans lequel ledit engrenage (7 à 11) est raccordé audit vilebrequin avec un jeu radial ; une paire de parties aplaties (22) étant prévues internement sur ledit engrenage (7 à 11) et coopérant avec des parties aplaties correspondantes (21) prévues sur ledit vilebrequin (3) en correspondance avec la région à calage dudit engrenage (7 à 11).

3. Moteur à combustion interne selon la revendication 1, dans lequel ledit siège de centrage (40) engage ledit vilebrequin (3) sensiblement sans jeu et d'une manière parfaitement coaxiale à celui-ci afin de centrer la plaque entière (4) par rapport au vilebrequin et dans lequel ledit angrenage (36 à 38) est librement logé à l'intérieur dudit siège de montage (34) avec un jeu radial et calé sensiblement sans jeu sur ledit vilebrequin (3) d'une manière parfaitement coaxiale à celui-ci.

4. Moteur à combustion interne selon la revendication 3, dans lequel une paire de parties aplaties (39) sont prévues internement sur ledit engrenage (36 à 38) et coopère avec des parties aplaties correspondantes (39) prévues sur ledit vilebrequin (3) en correspondance avec la région de calage dudit engrenage (36 à 38).

5. Moteur à combustion interne selon l'une quelconque des revendications précédentes, dans lequel ledit moyen de couplage comprend des vis de fixation (5) logées lâchement dans les sièges respectifs (5a) de ladite plaque (4).

6. Moteur à combustion interne selon l'une quelconque des revendications précédentes, dans lequel ledit dispositif de train d'engrenages de transmission comprend ledit engrenage (7 à 11, 36 à 38), une roue dentée correspondante (12, 42) calée sur ledit rotor (6, 31) d'une manière en travers rigide et une chaîne d'entraînement (13, 41) disposée pour transmettre le mouvement entre l'engrenage (7 à 11, 36 à 38) et ladite roue dentée (12, 42).

7. Moteur à combustion interne selon l'une quelconque des revendications précédentes, dans lequel un carter d'huile (46) est fixé à ladite plaque (4) et à l'intérieur duquel ladite pompe (1) est placée.

**Patentansprüche**

1. Verbrennungsmotor, der eine Ölpumpe (1), eine Kurbelwelle (3), die den Pumpenrotor (6, 31) der Ölpumpe (1) durch eine Verbindungseinrichtung zur Übertragung dreht, und ein Kurbel- bzw. Motorgehäuse (2), das die Kurbelwelle (3) trägt, und eine Antriebseinrichtung für die Ölpumpe (1) umfaßt, welche umfaßt: Die Verbindungseinrichtung zur Übertragung; eine Grundplatte (4), die die Pumpe (1) und die Verbindungseinrichtung zur Übertragung starr trägt, wobei die letztere ein Getriebe (7 - 11, 36 - 38) umfaßt, das im Winkel starr mit der Kurbelwelle (3) verkeilt ist und von dieser Platte (4) stillstehend getragen wird; und eine Kopplungseinrichtung (5, 5a, 21, 39), um die Platte gemeinsam mit dem Getriebe (7, 11, 36, 38), der Pumpe (1) und der Übertragungseinrichtung, die bereits vorher darauf aufgesetzt sind, an das Kurbel- bzw. Motorgehäuse (2) zu befestigen; dadurch gekennzeichnet, daß die Platte (4) mit einem Zentriersitz (15, 40) versehen ist, der an einem bestimmten Abstand von der Achse des Pumpenrotors (6, 31) erhalten wird, wobei ein radialer Spalt zwischen dem Getriebe (7, 11) und der Kurbelwelle (3) oder zwischen dem Getriebe (36, 38) und der Befestigungsaufnahme (34) zur Unterbringung des Getriebes (36, 38) vorgesehen ist, das koaxial mit dem Zentriersitz (40) durch die Platte (4) hindurch vorgesehen ist.

2. Verbrennungsmotor nach Anspruch 1, worin der Zentriersitz (15) das Getriebe (7 - 11) stillstehend, im wesentlichen ohne Schlupf und in einer vollständig koaxialen Weise mit dem Sitz (15) selbst umgibt, und worin das Getriebe (7 - 11) mit radialem Schlupf mit der Kurbelwelle verbunden ist; wobei ein Paar abgeflachte Abschnitte (22) innen auf dem Getriebe (7 - 11) vorgesehen ist und mit entsprechenden abgeflachten Abschnitten (21) in Wechselwirkung steht, die entsprechend dem Verkeilbereich des Getriebes (7 - 11) auf der Kurbelwelle (3) vorgesehen sind.

3. Verbrennungsmotor nach Anspruch 1, worin der Zentriersitz (40) im wesentlichen ohne Schlupf und in einer vollständig koaxialen Weise zur Kurbelwelle (3) in diese eingreift, um die gesamte Platte (4) bezüglich der Kurbelwelle zu zentrieren, und worin das Getriebe (36 - 38) stillstehend mit radialem Schlupf innerhalb der Befestigungsaufnahme (34) enthalten und im wesentlichen ohne Schlupf in einer vollständig koaxialen Weise zur Kurbelwelle (3) auf dieser verkeilt ist.

4. Verbrennungsmotor nach Anspruch 3, worin ein Paar abgeflachte Abschnitte (39) innen auf dem Getriebe (36 - 38) vorgesehen ist und mit entprechenden abgeflachten Abschnitten (39) in Wechselwirkung steht, die entsprechend dem Verkeilbereich des Getriebes (36 - 38) auf der Kurbelwelle (3) vorgesehen sind.

5. Verbrennungsmotor nach einem der vorstehenden Ansprüche, worin die Kopplungseinrichtung Befestigungsschrauben (5) umfaßt, die lose in entsprechenden Aufnahmen (5a) der Platte (4) sitzen.

6. Verbrennungsmotor nach einem der vorstehenen Ansprüche, worin die Verbindungseinrichtung zur Übertragung, das Getriebe (7 - 11, 36 - 38), ein entsprechendes Zahnrad (12, 42), das auf den Rotor (6, 31) in winkliger starrer Weise verkeilt ist, und eine Antriebskette (13, 41) umfaßt, die so angeordnet ist, daß sie die Bewegung zwischen dem Getriebe (7 - 11, 36 - 38) und dem Zahnrad (12, 42) überträgt.

7. Verbrennungsmotor nach einem der vorstehenden Ansprüche, worin eine Sammelmulde (46) an die Platte (4) befestigt ist, innerhalb der die Pumpe (1) angeordnet ist.

Fig.1

Fig.2

Fig.3